# EUROPEAN PATENT SPECIFICATION

(11) **EP 2 152 958 B1**
(45) Date of publication and mention of the grant of the patent: **03.11.2010**
(21) Application number: 08750874.3
(22) Date of filing: 30.04.2008
(51) Int. Cl.: D21B 1/32, D21F 1/70

(54) **FLOTATION CELL FOR PURIFYING FIBROUS SUSPENSIONS**
FLOTATIONSZELLE ZUR REINIGUNG VON FASERSUSPENSIONEN
CELLULE DE FLOTTAISON DESTINEE A PURIFIER DES SUSPENSIONS FIBREUSES

(30) Priority: 09.05.2007 IT VI20070133
(43) Date of publication of application: 17.02.2010
(73) Proprietor: COMER S.p.A., 36030 San Vito di Leguzzano (VI) (IT)
(72) Inventor: AVER, Franco, I - 36030 Valli del Pasubio (VI) (IT)
(74) Representative: Bonini, Ercole
(86) International application number: PCT/IB2008/001085
(87) International publication number: WO 2008/139289

(56) References cited:
- EP-A- 0 428 257
- WO-A-98/54402
- US-A- 5 028 315

## Description

The invention concerns a flotation cell for purifying fibrous suspensions, particularly suited to be used in the processing of recycled paper.

As is known, recycled paper is produced from an aqueous mixture of fibrous suspensions that contains also impurities, mainly inks, which must be removed from the mixture.

According to a known technique, the suspension is purified in suitable flotation cells, substantially constituted by a container in which the fibrous suspension is mixed with a plurality of microbubbles of air that, moving spontaneously upwards towards the surface of the suspension, bring the impurities to the surface.

The impurities accumulate on the surface of the mixture in the form of foams that are removed from the container, while the purified fibrous suspension proceeds towards the bottom of the container and is extracted from one or more points to continue the processing cycle.

In some cases, the purified suspension is reintroduced in the container, in such a way as to carry out several purification cycles in succession.

Several construction variants of flotation cells are known, which are described in detail in several patent documents.

Patent US 5571422 describes a flotation cell, also called "reactor", comprising a container containing the fibrous suspension to be purified, whose inside is provided with rotary blades that keep the suspension in movement and thus favour its close contact with the air microbubbles.

According to this patent, the suspension is introduced in the container through suitable feed pipes, each provided with a Venturi pipe that draws in air from the outside and disperses it in the suspension to be purified in the form of microbubbles.

According to a variant protected by patent WO 98/54403, in the name of the same applicant filing this patent, each rotary blade is provided with a disc with slots, having the function to stabilize the flows inside the container in such a way as to improve the purification process.

The above mentioned patent was successively improved by patent WO 98/54402, also held by the applicant filing this patent, in which extraction of the purified suspension and reintroduction of the same in the container take place in several points, thus obtaining a more refined purification cycle that enables better results to be achieved than those achieved in the cases described above.

Owing to the presence of a large number of pipes, this construction form is particularly complex and poses the drawback of involving high cell construction costs, as well as considerable maintenance costs, since the cleaning operations that must be performed periodically require more labour.

In order to overcome this problem, a further construction variant has been developed, described in patent application ITVI2004A000181 filed in the name of the applicant, which has fewer feed pipes than the construction variants previously described.

In this construction variant, each feed pipe extends inside the container, where it branches into a plurality of ejectors arranged radially.

All the construction forms described above have in common the fact that each feed pipe comprises a Venturi pipe that draws in a plurality of air microbubbles and disperses them in the suspension flow introduced in the container. Furthermore, each feed pipe is associated with pumping means that generate the head necessary for the operation of the corresponding Venturi pipe.

A drawback posed by said pumping means associated with the Venturi pipes lies in that they absorb a large quantity of power, since they have to overcome the flow resistance caused by the Venturi pipe, with the consequence that the running costs of the flotation cell are high.

A further drawback posed by the flotation cells described above lies in the maintenance complexity and in the maintenance times required due to the presence of the Venturi pipes and of the corresponding pumping means.

The object of the present invention is to overcome all the drawbacks described above.

In particular, it is a first object of the invention to construct a perfected flotation cell that absorbs less power than the flotation cells provided with Venturi pipes for the introduction of air in the suspension and ensuring the same purifying effect.

It is a further object of the invention to reduce the complexity of the maintenance operations to be carried out compared to the flotation cells of known type.

The objects mentioned above are achieved by a perfected flotation cell carried out according to the main claim.

Other details of the invention are described in the corresponding dependent claims.

According to the preferred embodiment of the invention described herein, the flotation cell that is the subject of the invention comprises a container for the suspension to be purified, provided with feed pipes for the introduction of the suspension and comprising internal rotary blades for stirring the suspension during the purification process.

According to the invention, the flotation cell comprises air dispersers suited to generate a plurality of air microbubbles and disperse them in the suspension. Each air disperser comprises at least one rotor with axial flow associated with driving means suited to set it rotating and at least one duct for conveying external air into the suspension at the level of the rotor.

With the same suspension flow rate, the above mentioned axial flow rotors absorb less power than that required by the pumping means associated with Venturi pipes and used in the flotation cells of known type.

Consequently, to advantage, the total installed power of the cell of the invention is less than that of cells of known type with Venturi pipes and having the same purifying effect, so that the motors used are smaller and installation costs lower.

Still advantageously, less installed power means less energy consumption and therefore lower running costs.

Still advantageously, the air dispersers require less complex maintenance than the Venturi pipes and corresponding pumping means of the flotation cells of known type.

Furthermore, the air dispersers are suited to be arranged both inside and outside the container, thus ensuring more flexibility in the design of the cell. Still advantageously, the absence of the Venturi pipes makes the whole simpler and less expensive to carry out compared to the known solutions. Finally, the dispersers can advantageously replace the Venturi pipes and the corresponding pumping means in the flotation cells of known type.

This advantageously makes it possible to convert existing systems obtaining the same benefits described above for the flotation cell of the invention, at a lower cost than that required for the construction of a completely new flotation cell.

The above-mentioned objects and advantages will be highlighted in greater detail in the description that follows, which is provided as an example without limitation, with reference to the attached drawings, wherein:
- Figure 1 shows a side view of the cell of the invention, in cross section according to the plane I - I shown in Figure 3;
- Figure 2 shows a cross section of a detail of the cell shown in Figure 1;
- Figure 3 shows a plan view of the cell shown in Figure 1;
- Figure 4 shows a construction variant of the invention;
- Figure 5 shows a construction variant of a detail of the invention.

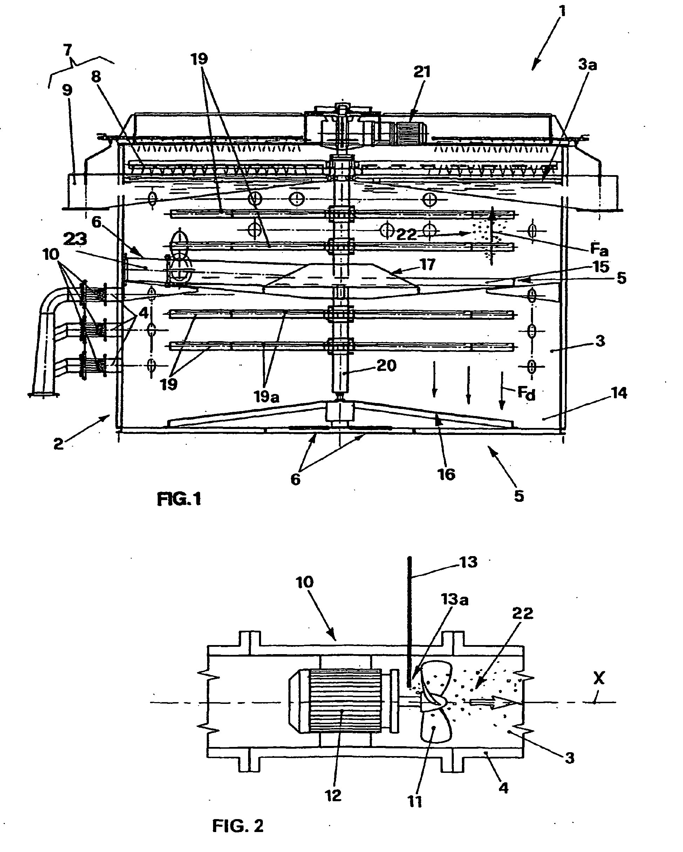

The flotation cell that is the subject of the invention is shown in Figure 1 where it is indicated as a whole by **1** and where it can be observed that it comprises a container **2** for the suspension **3** to be purified that is preferably but not necessarily cylindrical in shape.

The introduction of the suspension **3** in the container **2** takes place through feed pipes **4** that, in different embodiments of the invention, can vary in number and outlet position, according to the flow to be created inside the container **2.**

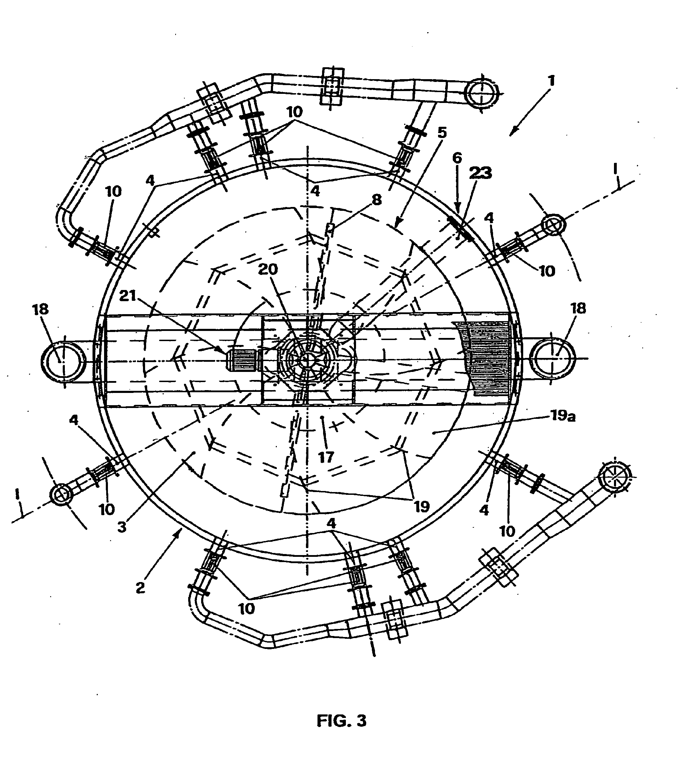

For the sake of simplicity, Figure 1 shows only the three left feed pipes **4** that however, as shown by the plan view of Figure 3, are arranged on the entire circumference of the container **2.**

The flotation cell **1** of the invention also comprises means **5** for intercepting the purified suspension that due to gravity goes down towards the bottom of the container **2,** associated with means **6** for extracting the suspension from the container **2.**

According to the invention, in each feed pipe **4** there is an air disperser **10** that generates and disperses a plurality of air microbubbles **22** in the suspension to be purified that flows therein.

In other embodiments of the invention, there may be more than one air disperser **10** in each feed pipe **4.**

In further embodiments of the invention and as described below, the air dispersers **10** may be arranged inside the container, in addition to or instead of those arranged in the feed pipe **4.**

There are also discharge means **7** for eliminating the foams that accumulate on the surface **3a** of the suspension, said foams containing the impurities caught and brought along by the air microbubbles **22** while they spontaneously move upwards through the suspension.

As shown in Figure 2, each air disperser **10** comprises a rotor **11** with axial flow immersed in the suspension and associated with driving means **12,** preferably constituted by an electric motor, suited to set it rotating according to an axis **X** preferably coaxial to the corresponding feed pipe **4.**

In construction variants of the invention, each air disperser **10** may be provided with more than one rotor **11** with axial flow, according to the flow rate that must be obtained through the feed pipe **4.**

Each air disperser **10** also comprises a duct **13** for conveying external air into the suspension, provided with an intake mouth, not represented herein, that communicates with the outside of the feed pipe **4** and with a delivery mouth **13a** arranged inside the feed pipe **4,** in proximity to the rotor **11.** Preferably, the delivery mouth **13a** of the air conveying duct **13** will be arranged at the level of the central part of the corresponding rotor **11.**

The air dispersers **10** with axial rotors make it possible to obtain a cell **1** that absorbs less power than the cells with Venturi pipes having the same purifying effect.

In fact, in the flotation cell **1** of the invention, the air coming from the outside is mixed with the flow of the suspension to be purified due to the swirling motion created by the rotor **11** during rotation.

Vice versa, in the cells with Venturi pipes, the air is drawn in due to the pressure decrease produced in the suspension when it passes through the Venturi pipes themselves, through which it must be pushed by high head pumps that absorb much more power than the above mentioned air dispersers. Preferably, the rotors **11** of the air dispersers **10** are of the propeller type, even if any type of rotor can be employed, provided that it is suitable for generating a substantially axial motion of the fibrous suspension inside the corresponding feed pipe **4,** absorbing limited power.

The intercepting means **5** comprise two intercepting tanks, a first tank **14** arranged on the bottom of the container **2** and a second tank **15** arranged in an intermediate position in the same container.

Other embodiments of the invention not represented herein may comprise only one intercepting tank **14** arranged on the bottom of the container **2,** to which if necessary two or more intercepting tanks can be added, in intermediate positions in the container.

Each intercepting tank **14, 15** comprises a hood-shaped element **16, 17** tapering upwards, which prevents the flow taken from the intercepting tanks **14, 15** from interfering with the purification process in the container **2.** The extraction means **6** comprise an outlet pipe **23** associated with each tank **14, 15,** which here is represented by way of example only for the second tank **15.**

The outlet pipes **23** are provided with pumping means, not represented herein, which draw in the purified suspension and convey it outside the container **2.**

In other embodiments of the invention, not represented herein, one or more outlet pipes **23** can be placed in communication with at least one of the above mentioned feed pipes **4,** so that it is possible to recirculate the suspension and make it undergo several successive purification cycles.

The discharge means **7** comprise a rotary skimming blade **8** arranged in the container **2** just above the surface **3a** of the suspension, as shown also in Figure 3.

The discharge means **7** also comprise a collection tank **9** arranged inside the container **2** below the surface **3a** of the suspension, associated with collection ducts **18** that communicate with the outside of the container **2.**

Obviously, other embodiments of the invention may comprise more than one rotary skimming blade **8** and/or more than one collection tank **9.**

The flotation cell **1** that is the subject of the invention also comprises a series of rotary vanes **19** arranged inside the container **2** along a shaft **20** that is set rotating by driving means **21** and is preferably oriented vertically, said vanes stirring the fibrous suspension **3** to be purified.

Preferably, and as shown in Figure 1, the rotary vanes **19** are arranged at various levels in the container **2,** even though in construction variants of the invention they may be present in any number and any position.

Preferably, each vane **19** comprises a disc **19a** with a series of slots, which advantageously makes it possible to stabilize the motion of the suspension and to obtain better contact of the same with the air microbubbles **22.**

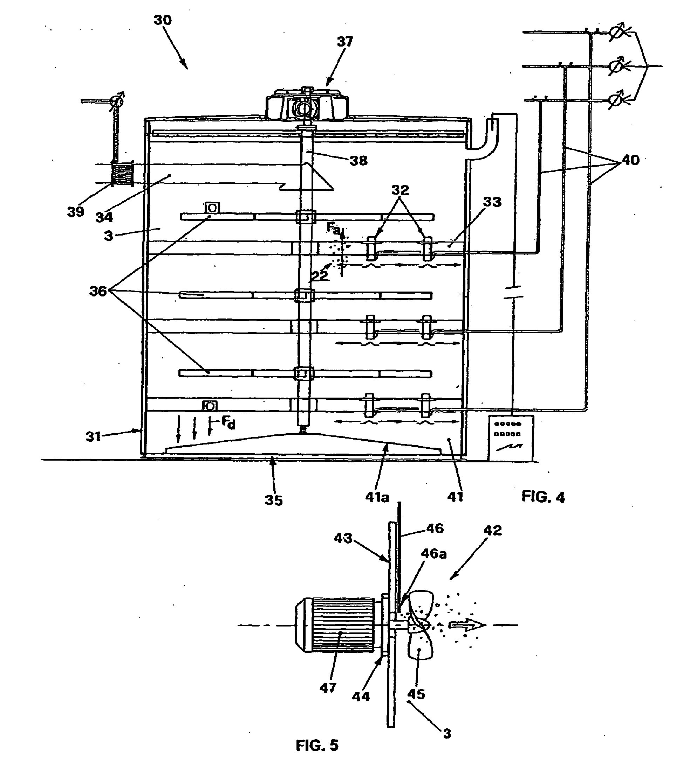

According to a construction variant of the invention, schematically illustrated in Figure 4 and indicated by **30,** the air dispersers **32** are arranged inside the container **31,** where they are sustained by supporting structures **33.**

Each air disperser **32** is associated with a duct **40** for conveying external air, provided with an intake mouth that communicates with the outside of the container **31** and with a delivery mouth arranged in proximity to the rotor **11** of the disperser **32** itself, preferably at the level of the central part.

Figure 4 also shows a feed pipe **34** for introducing the suspension to be purified **3** into the container **31,** the intercepting means **35** for collecting it from the container **31** and the rotary vanes **36** associated with driving means **37** through a shaft **38.**

Clearly, the air dispersers **32** can be present in any number and any arrangement as established by the manufacturer according to the flow of air microbubbles **22** to be obtained.

It is also evident that, in construction variants of the invention, the air dispersers **32** can be sustained by the inner wall of the container **31** instead of by supporting structures **33.**

According to the example shown in Figure 5, the motor **47** of the air disperser **42** is fixed to the external wall **43** of the container, preferably by means of a flange **44,** and has the rotor **45** arranged inside the container and immersed in the suspension **3.**

Also in this case, a duct **46** for conveying air is provided, with a delivery mouth **46a** arranged at the level of the central part of the rotor **45.** Advantageously, the arrangement just described is particularly suitable for use in the reconditioning of existing systems, since it requires no major changes to the ducts or the inside of the container.

Still advantageously, maintenance of the motor **47** is particularly simple, since it is arranged outside the container.

For the same reason, to advantage, the motor **47** is subjected to less severe operating conditions.

However, it is evident that, in further construction variants of the invention not illustrated herein, the air dispersers **42** can be fixed to the inner wall of the container instead of to its outer wall.

The positions of the air dispersers **10, 32** indicated up to now for the embodiments of the cells **1, 30** can also be combined with each other, for example by arranging some air dispersers **10, 32** in the feed pipes **4, 34** and other air dispersers inside the container **2, 31.**

Obviously, the above description is valid independently of the arrangement of the air dispersers **10, 32.**

In practice, with particular reference to the flotation cell **1** shown in Figure 1, the fibrous suspension **3** to be purified is introduced in the container **2** through the feed pipes **4** by means of the rotors **11** present in the air dispersers **10.** The air conveying duct **13** connected to each air disperser **10** introduces in the suspension an air flow coming from the outside that, owing to the turbulence of the suspension in proximity to the rotor **11,** is dispersed therein in the form of microbubbles **22.**

The microbubbles **22,** transported inside the container **2** together with the suspension, move spontaneously upwards towards the surface **3a** catching, in their upward flow **Fa,** the impurities contained therein and transporting them to the surface in the form of foam.

The catching of the impurities is facilitated using chemical substances properly dissolved in the suspension **3,** while the rotary vanes **19** favour the close contact between the microbubbtes **22** and the suspension **3.**

The suspension **3** proceeds in a downward flow **Fd** towards the bottom of the container **2** and is collected at the level of each intercepting tank **14, 15,** where the extraction means **6** convey it outside the container **2.**

The purified suspension may be completely or partially, continuously or intermittently, be reintroduced in the container **2** to undergo further purification cycles.

It is clear that the presence of the air dispersers **10** instead of the Venturi pipes and of the relative pumps makes it possible to achieve the aim to limit the complexity of the flotation cell **1.**

Consequently, the invention also achieves the aim to make maintenance and cleaning of the flotation cell **1** easier compared to the cells of known type having the same purifying effect.

Furthermore, the dispersers **10** are external and therefore very easy to reach, to the benefit of maintenance simplicity.

The description provided above substantially applies also to the flotation cell **30** shown in Figure 4, with the only difference that here the air dispersers **32** are arranged inside the container **31,** where they generate and disperse the air microbubbles **22.**

In this case, pumping means **39** are provided for conveying the suspension **3** into the container **31** which, since they don't have to feed the Venturi pipes, advantageously absorb less power than the flotation cells of known type with Venturi pipes.

In the light of the above considerations, the invention achieves all the previously-stated objects.

In particular, the invention achieves the object to produce a perfected flotation cell whose installed power is less than that of the known systems. Advantageously, said less installed power also means more efficiency, that is, reduced specific energy consumption.

This is confirmed by experimental tests carried out by the inventor, which in relation to the flotation cell of the invention showed a specific consumption of approximately 20 kW/ton of treated product, compared to the approximately 50 kW/ton of treated product consumed by flotation cells with Venturi pipes having the same purifying effect.

The invention also achieves the aim to produce a flotation cell that, given the absence of Venturi pipes and their replacement with air dispersers, requires less complex maintenance than the flotation cells of known type.

On implementation, the flotation cell that is the subject of the invention may undergo changes that, though not illustrated or described herein, shall nonetheless be covered by the present patent, provided that they come within the scope of the claims that follow.

Where technical features mentioned in any claim are followed by reference signs, those reference sings have been included for the sole purpose of increasing the intelligibility of the claims and accordingly such reference signs do not have any limiting effect on the interpretation of each element identified by way of example by such reference signs.

## Claims

1. Flotation cell (1; 30) for purifying fibrous suspensions through the dispersion of air microbubbles (22), of the type comprising:
- a container (2;31) for containing said suspension to be purified (3);
- one or more feed pipes (4; 34) for conveying said suspension to be purified (3) into said container (2; 31);
- means (5; 35) for intercepting the purified suspension during its downward flow (Fd), under the influence of gravity, towards the bottom of said container (2; 31);
- means (6) for extracting the purified suspension from said container (2; 31), associated with said intercepting means (5 ; 35);
- means (7) for discharging the foams created by the impurities contained in said suspension (3) caught by said air microbubbles (22) during their upward flow (Fa) towards the surface (3a) of said suspension (3);
- one or more rotary vanes (19; 36) arranged inside said container (2; 31) for stirring said suspension (3) during the purification process;
**characterized in that** it comprises a plurality of air dispersers (10; 32; 42) for generating said air microbubbles (22) and dispersing them in said suspension (3), each air dispenser (10; 32; 42) comprising at least one rotor (11; 45) with axial flow associated with driving means (12; 47) suited to set it rotating, and at least one duct (13; 40; 46) for conveying external air at the level of said rotor (11; 45).

2. Flotation cell (1; 30) according to claim 1) **characterized in that** said air conveying duct (13; 40; 46) is provided with one intake mouth communicating with the external environment and one delivery mouth (13a; 46a) arranged at the level of the central part of said rotor (11; 45) of said air disperser (10; 32; 42).

3. Flotation cell (1; 30) according to claim 2), **characterized in that** said rotor (11; 45) is of the propeller type.

4. Flotation cell (1) according to claim 3), **characterized in that** one or more of said air dispersers (10) is/are arranged in said feed pipes (4).

5. Flotation cell (30) according to any of claims 3) or 4), **characterized in that** one or more of said air dispersers (32) is/are arranged inside said container (31).

6. Flotation cell (30) according to claim 5), **characterized in that** one or more of said air dispersers (32) is/are sustained by supporting structures (33).

7. Flotation cell (30) according to claim 5), **characterized in that** one or more of said air dispersers (32) is/are sustained by the inner wall of said container (31).

8. Flotation cell according to claim 5), **characterized in that** one or more of said air dispersers (42) is/are sustained by the outer wall (43) of said container.

9. Flotation cell (1; 30) according to claim 1), **characterized in that** said container (2; 31) is cylindrical in shape.

10. Flotation cell (1; 30) according to claim 1), **characterized in that** said intercepting means (5; 35) comprise at least one intercepting tank (14, 15; 41) arranged inside said container (2; 31).

11. Flotation cell (1) according to claim 10), **characterized in that** said intercepting means (5) comprise a first intercepting tank (14) arranged on the bottom of said container (2) and a second intercepting tank (15) arranged in an intermediate position in said container (2).

12. Flotation cell (1; 30) according to any of claims 10) or 11), **characterized in that** each of said intercepting tanks (14, 15; 41) comprises a hood-shaped element (16, 17; 41 a) tapering upwards.

13. Flotation cell (1; 30) according to any of claims from 10) to 12), **characterized in that** said extraction means (6) comprise at least one outlet pipe (23) associated with each one of said intercepting tanks (14, 15; 41) and pumping means associated with said outlet pipe (23).

14. Flotation cell (1; 30) according to claim 1), **characterized in that** said discharge means (7) comprise at least one rotary skimming blade (8) arranged just above the surface (3a) of said suspension (3) and at least one collection tank (9) arranged inside said container (2; 31) below said surface (3a), associated with at least one collection duct (18) communicating with the outside of said container (2; 31).

15. Flotation cell (1; 30) according to claim 1), **characterized in that** said rotary vanes (19; 36) are associated with a shaft (20; 38) set rotating by driving means (21; 37).

## Patentansprüche

1. Flotationszelle (1; 30) zur Klärung faseriger Suspensionen durch Dispersion von Mikro-Luftbläschen (22), von dem Typ, der Folgendes umfasst:
- einen Behälter (2; 31) zur Aufnahme der besagten, zu klärenden Suspension (3);
- eine oder mehrere Zuleitungen (4; 34) für die Einleitung besagter, zu klärender Suspension (3) in den besagten Behälter (2; 31);
- Absperrmittel (5; 35) für die geklärte Suspension während ihres schwerkraftbedingten Abwärtsflusses (Fd) auf den Boden des besagten Behälters (2; 31);
- Mittel (6) für den Auszug der geklärten Suspension aus besagtem Behälter (2; 31), die den besagten Absperrmitteln (5 ; 35) zugeordnet sind; Auslassmittel (7) für den Schaum, der durch die in besagter Suspension (3) enthaltenen und während ihrer Aufschwimmbewegung (Fa) an die Oberfläche (3a) besagter Suspension (3) durch besagte Mikro-Luftbläschen (22) aufgenommenen Verunreinigungen gebildet wird;
- eine oder mehrere, in besagtem Behälter (2; 31) angeordnete Drehschaufeln (19; 36) zum Rühren besagter Suspension (3) während des Klärprozesses,
**dadurch gekennzeichnet, dass** sie eine Vielzahl von Luftverteilern (10; 32; 42) für die Erzeugung besagter Mikro-Luftbläschen (22) und ihre Verteilung in besagter Suspension (3) umfassen, wobei jeder Luftverteiler (10; 32; 42) wenigstens einen Axialfluss-Rotor (11; 45) mit zugehörigen Antriebsmitteln (12; 47) aufweist, die ihn in Drehung versetzen, sowie wenigstens eine Leitung (13; 40; 46) für die Zuführung von Außenluft auf der Höhe des besagten Rotors (11; 45).

2. Flotationszelle (1; 30) gemäß Patentanspruch 1), **dadurch gekennzeichnet, dass** die besagte Luft-Zuleitung (13; 40; 46) eine Ansaugstutzen aufweist, die mit der Außenumgebung kommuniziert, sowie einen Auslassstutzen (13a; 46a), die in dem mittleren Bereich von besagtem Rotor (11; 45) des besagten Luftverteilers (10; 32; 42) angeordnet ist.

3. Flotationszelle (1; 30) gemäß Patentanspruch 2), **dadurch gekennzeichnet, dass** der besagte Rotor (11; 45) ein Schraubenrotor ist.

4. Flotationszelle (1) gemäß Patentanspruch 3), **dadurch gekennzeichnet, dass** einer oder mehrere der besagten Luftverteiler (10) in den besagten Zuleitungen (4) angeordnet ist/sind.

5. Flotationszelle (30) gemäß Patentanspruch 3) oder 4), **dadurch gekennzeichnet, dass** einer oder mehrere der besagten Luftverteiler (32) in besagtem Behälter (31) angeordnet ist/sind.

6. Flotationszelle (30) gemäß Patentanspruch 5), **dadurch gekennzeichnet, dass** einer oder mehrere der besagten Luftverteiler (32) durch Tragstrukturen (33) gehalten wird/werden.

7. Flotationszelle (30) gemäß Patentanspruch 5), **dadurch gekennzeichnet, dass** einer oder mehrere der besagten Luftverteiler (32) durch die Innenwand des besagten Behälters (31) gehalten wird/werden.

8. Flotationszelle gemäß Patentanspruch 5), **dadurch gekennzeichnet, dass** einer oder mehrere der besagten Luftverteiler (42) durch die Außenwand (43) des besagten Behälters gehalten wird/werden.

9. Flotationszelle (1; 30) gemäß Patentanspruch 1), **dadurch gekennzeichnet, dass** der besagte Behälter (2; 31) eine zylindrische Form aufweist.

10. Flotationszelle (1; 30) gemäß Patentanspruch 1), **dadurch gekennzeichnet, dass** die besagten Absperrmittel (5; 35) wenigstens einen Absperrtank (14, 15; 41) umfassen, der innerhalb des besagten Behälters (2; 31) angeordnet ist.

11. Flotationszelle (1) gemäß Patentanspruch 10), **dadurch gekennzeichnet, dass** die besagten Absperrmittel (5) einen ersten Absperrtank (14) umfassen, der am Boden besagten Behälters (2) angeordnet ist, und einen zweiten Absperrtank (15), der in einer mittleren Position im besagten Behälter (2) angeordnet ist.

12. Flotationszelle (1; 30) gemäß Patentanspruch 10) oder 11), **dadurch gekennzeichnet, dass** jede der besagten Absperrtanks (14, 15; 41) ein haubenförmiges Element (16, 17; 41 a) umfasst, das nach oben kegelförmig zuläuft.

13. Flotationszelle (1; 30) gemäß eines jeden Patentanspruchs von 10) bis 12), **dadurch gekennzeichnet, dass** die besagten Auszugsmittel (6) wenigstens eine jeweils jedem der besagten Absperrtanks (14, 15; 41) zugehörige Auslassleitung (23) sowie der besagten Auslassleitung (23) zugehörige Pumpmittel umfassen.

14. Flotationszelle (1; 30) gemäß Patentanspruch 1), **dadurch gekennzeichnet, dass** die besagten Auslassmittel (7) wenigstens ein rotierendes Abschöpfblatt (8) aufweisen, das knapp über der Oberfläche (3a) besagter Suspension (3) angeordnet ist, und wenigstens einen Auffangtank (9) innerhalb besagten Behälters (2; 31), unterhalb besagter Oberfläche (3a), der wenigstens einer mit der Außenumgebung besagten Behälters (2; 31) kommunizierenden Sammelleitung (18) zugeordnet ist.

15. Flotationszelle (1; 30) gemäß Patentanspruch 1), **dadurch gekennzeichnet, dass** die besagten Drehschaufeln (19; 36) zu einer Welle (20; 38) gehören, die durch Antriebsmittel (21; 37) in Drehung versetzt wird.

## Revendications

1. Cellule de flottation (1; 30) pour l'épuration de suspensions fibreuses par dispersion de microbulles d'air (22), du type comprenant:
- un conteneur (2; 31) pour contenir ladite suspension à épurer (3);
- un ou plusieurs tuyaux d'alimentation (4; 34) pour l'introduction de ladite suspension à épurer (3) dans ledit conteneur (2; 31);
- des moyens (5; 35) d'interception de la suspension épurée durant sa descente (Fd), par gravité, vers le fond dudit conteneur (2; 31);
- des moyens extracteurs (6) de la suspension épurée dudit conteneur (2; 31), associés auxdits moyens d'interception (5; 35);
- des moyens d'évacuation (7) des mousses formées par les impuretés contenues dans ladite suspension (3) capturées par lesdites microbulles d'air (22) durant leur montée (Fa) vers la surface (3a) de ladite suspension (3);
- une ou plusieurs aubes rotatives (19; 36) disposées à l'intérieur dudit conteneur (2; 31) pour l'agitation de ladite suspension (3) durant le processus d'épuration;
**caractérisée en ce qu'**elle comprend une pluralité de disperseurs d'air (10; 32; 42) pour la génération desdites microbulles d'air (22) et leur dispersion dans ladite suspension (3), chaque disperseur d'air (10; 32; 42) comprenant au moins un rotor (11; 45) avec débit axial associé à des moyens d'actionnement (12; 47) indiqués pour le mettre en rotation, et au moins un conduit (13; 40; 46) d'adduction d'air extérieur à hauteur du rotor (11 ; 45).

2. Cellule de flottation (1; 30) selon la revendication 1), **caractérisée en ce que** ledit conduit d'adduction d'air (13; 40; 46) présente une bouche de prise communiquant avec le milieu extérieur et une bouche de refoulement (13a; 46a) disposée à hauteur de la partie centrale dudit rotor (11; 45) dudit disperseur d'air (10; 32; 42).

3. Cellule de flottation (1; 30) selon la revendication 2), **caractérisée en ce que** ledit rotor (11; 45) est du type à hélice.

4. Cellule de flottation (1) selon la revendication 3), **caractérisée en ce qu'**un ou plusieurs desdits disperseurs d'air (10) est/sont disposé/s dans lesdits tuyaux d'alimentation (4).

5. Cellule de flottation (30) selon l'une quelconque des revendications 3) ou 4), **caractérisée en ce qu'**un ou plusieurs desdits disperseurs d'air (32) est/sont disposé/s à l'intérieur dudit conteneur (31).

6. Cellule de flottation (30) selon la revendication 5), **caractérisée en ce qu'**un ou plusieurs desdits disperseurs d'air (32) est/sont soutenu/s par des structures de support (33).

7. Cellule de flottation (30) selon la revendication 5), **caractérisée en ce qu'**un ou plusieurs desdits disperseurs d'air (32) est/sont soutenu/s par la paroi intérieure dudit conteneur (31).

8. Cellule de flottation selon la revendication 5), **caractérisée en ce qu'**un ou plusieurs desdits disperseurs d'air (42) est/sont soutenu/s par la paroi extérieure (43) dudit conteneur.

9. Cellule de flottation (1; 30) selon la revendication 1), **caractérisée en ce que** ledit conteneur (2; 31) présente une forme cylindrique.

10. Cellule de flottation (1 ; 30) selon la revendication 1), **caractérisée en ce que** lesdits moyens d'interception (5; 35) comprennent au moins un réservoir d'interception (14, 15; 41) positionné à l'intérieur dudit conteneur (2; 31).

11. Cellule de flottation (1) selon la revendication 10), **caractérisée en ce que** lesdits moyens d'interception (5) comprennent un premier réservoir d'interception (14) positionné sur le fond dudit conteneur (2) et un deuxième réservoir d'interception (15) disposé dans une position intermédiaire dans ledit conteneur (2).

12. Cellule de flottation (1; 30) selon l'une quelconque des revendications 10) ou 11), **caractérisée en ce que** chacun desdits réservoirs d'interception (14, 15; 41) comprend un élément en forme de hotte (16, 17; 41 a) avec une conicité convergeant vers le haut.

13. Cellule de flottation (1; 30) selon l'une quelconque des revendications de 10) à 12), **caractérisée en ce que** lesdits moyens extracteurs (6) comprennent au moins un tuyau de sortie (23) associé à chacun desdits réservoirs d'interception (14, 15; 41) et des moyens de pompage associés audit tuyau de sortie (23).

14. Cellule de flottation (1; 30) selon la revendication 1), **caractérisée en ce que** lesdits moyens d'évacuation (7) comprennent au moins une lame rotative d'écrémage (8) positionnée au-dessus de la surface (3a) de ladite suspension (3) et au moins une cuve de collecte (9) positionnée à l'intérieur dudit conteneur (2; 31) au-dessous de ladite surface (3a), associées à au moins un conduit de collecte (18) communiquant avec la partie extérieure dudit conteneur (2; 31).

15. Cellule de flottation (1 ; 30) selon la revendication 1), **caractérisée en ce que** lesdites aubes rotatives (19; 36) sont associées à un arbre (20; 38) mis en rotation par des moyens d'actionnement (21; 37).
